# EUROPÄISCHE PATENTSCHRIFT

(11) **EP 1 055 348 B1**
(45) Veröffentlichungstag und Bekanntmachung des Hinweises auf die Patenterteilung: **06.01.2010**
(21) Anmeldenummer: 99914408.2
(22) Anmeldetag: 10.02.1999
(51) Int. Cl.: H04W 8/12

(54) **VERFAHREN ZUR ERKENNUNG EINER INTERNATIONALEN ROAMING-BEZIEHUNG**
METHOD FOR IDENTIFYING AN INTERNATIONAL ROAMING RELATION
PROCEDE POUR IDENTIFIER UNE RELATION D'ITINERANCE INTERNATIONALE

(30) Priorität: 10.02.1998 DE 19805261
(43) Veröffentlichungstag der Anmeldung: 29.11.2000
(73) Patentinhaber: T-Mobile Deutschland GmbH, 53227 Bonn (DE)
(72) Erfinder: JUNG, Christof, D-53757 Sankt Augustin (DE)
(74) Vertreter: Riebling, Peter
(86) Internationale Anmeldenummer: PCT/DE1999/000358
(87) Internationale Veröffentlichungsnummer: WO 1999/040748

(56) Entgegenhaltungen:
- EP-A- 0 497 203
- EP-A- 0 742 676
- BRINI I ET AL: "INTERNATIONAL ROAMING IN DIGITAL CELLULAR NETWORKS" PROCEEDINGS OF THE INTERNATIONAL SWITCHING SYMPOSIUM, YOKOHAMA, OCT. 25 - 30, 1992, Bd. 1, Nr. SYMP. 14, 25. Oktober 1992 (1992-10-25), Seiten 132-136, XP000337631 INSTITUTE OF ELECTRONICS;INFORMATION AND COMMUNICATION ENGINEERS

## Beschreibung

Wenn sich ein Teilnehmer eines inländischen oder ausländischen Mobilfunknetzes als Gastteilnehmer (Roamer) in einem fremden Mobilfunknetz zum erstem Male registriert, ist er zunächst nicht informiert über bestehende Hilfsdienste oder wichtige Serviceleistungen welche im fremden Mobilfunknetz verfügbar sind.
Z.B. wäre es für Gastteilnehmer sehr hilfreich, Informationen über die wichtigsten im Fremdnetz verfügbaren Servicerufnummern, über angebotenen Mehrwertdienste und andere Nutzungsmöglichkeiten zu bekommen.

Beim Aufbau von Internationalen Roaming-Beziehungen zu andern Mobilfunk-Netzbetreibern werden Signalisierungsverbindungen zwischen dem öffentlichen Fremd-Mobilfunknetz (VPLMN: Visited Public Land Mobile Network und dem öffentlichen Heimat-Mobilfunknetz (HPLMN: Home Public Land Mobile Network) in Betrieb genommen. Über diese Verbindungen werden Informationen ausgetauscht, die das Einbuchen und Telefonieren der Gastteilnehmer (Roamer) im jeweiligen Fremd-Mobilfunknetz (Visited-PLMN) ermöglichen. Bei diesen Informationen handelt es sich um SCCP/MAP-Nachrichten die zwischen VPLMN und HPLMN ausgetauscht werden. Diese Nachrichten werden also über das Signalisierverbindungs-Steuerteil (SCCP) und das Anwenderteil für den Mobilfunk (MAP) abgewickelt.

Die EP-A-0 497 203 beschreibt ein Verfahren, welches unter anderem eine Roaming Beziehung zwischen einem Fremd- und einem Heimat-Mobilfunknetz zum Zwecke der Information des Gastteilnehmers (Roamers) erkennt. Dazu wird die Identität des Gastteilnehmers ermittelt und es erfolgt anhand der ermittelten Identität im Fremd-Mobilfunknetz eine gezielte Benachrichtigung und Information des Gastteilnehmers. Die Information der Identität des Roamers wird auf der Cell/MTSO Datenverbindung, also der Verbindung zwischen Zellcontroller und Mobilvermittlungsstelle (MTSO) mittels eines Protokollanalysators ermittelt, oder alternativ direkt aus den MTSOs abgeleitet. Dies erfordert eine grosse Anzahl von Protokollanalysatoren.

Es ist Aufgabe der Erfindung, ein Verfahren zur Erkennung einer Internationalen Roaming-Beziehung vorzuschlagen, welches einfach und ohne Änderung der Mobilfunknetzelemente durchgeführt werden kann und eine Benachrichtigung und Information des Gastteilnehmers im Fremd-Mobilfunknetz erlaubt.

Diese Aufgabe wird durch die kennzeichnenden Merkmale des Patentanspruchs 1 gelöst.

Erfindungsgemäß wird die Übermittlung der SCCP/MAP-Signalisierungsdaten zwischen dem VPLMN und dem HPLMN ausgenutzt. In diesen Daten werden u.a. auch die Identität, z.B. MSISDN oder IMSI, und das benutzte Fremd-Mobilfunknetz des Gastteilnehmers (Roamers) übermittelt. Diese Roamer-Identität wird ermittelt und dann für die Übermittlung einer Benachrichtigung an den Teilnehmer verwendet.

Vorteilhafte Weiterbildungen der Erfindung sind Gegenstand der abhängigen Ansprüche.

Anhand der ermittelten Identität des Teilnehmers, erfolgt eine gezielte Benachrichtigung des Teilnehmers in Form einer Informationsnachricht oder einer Begrüßungsnachricht, die aufgrund der ermittelten Identität in der im Heimat-Mobilfunknetz des Gastteilnehmers benutzten Sprache vorgenommen werden kann.

Die Benachrichtigung erfolgt über den Kurznachrichtendienst (SMS) des Mobilfunknetzes und/oder durch eine Sprachansage.

Die Überwachung des Signalisierungsverkehrs wird durch Protokollaufzeichungsgeräte realisiert, die mit einem vom Mobilfunknetz unabhängigen Rechner zur Auswertung, Erfassung, Verwaltung und Speicherung der Signalisierungsdaten verbunden sind.

Ausgehend von diesem Rechner erfolgt über die üblichen Kommunikationswege des Mobilfunknetzes die Benachrichtigung des Gastteilnehmer, wobei die Benachrichtigung vorzugsweise nur bei erstmaligem Einbuchen des Teilnehmers in dem Fremd-Mobilfunknetz erfolgt.

Durch die Erfindung werden folgende Vorteile erzielt:
- Die Erfassung 'Verwaltung und Speicherung der Identität des Gastteilnehmers (Roamers) sowie der Benachrichtigungszeit erfolgt nicht im Mobilfunknetz (VLR oder zentralen Stelle des Netzes) sondern in einem vom Mobilfunknetz unabhängigen Rechner.
- Es muß kein vom Netzbetreiber festgelegtes spezifisches Datentransferprotokoll angewendet werden.
- Es sind keine Änderungen an Mobilfunknetzelementen (VLR, HLR, MSC) nötig.
- Es können auch Gastteilnehmer aus dem eigenen Mobilfunknetz in anderen Mobilfunknetzen erfaßt und benachrichtigt werden.

Nachfolgend wird die Erfindung anhand eines Beispiels unter Zuhilfenahme von Zeichnungen näher erläutert. Es zeigt:
- Figur 1:: die wichtigsten MAP-Nachrichten, die beim Einbuchen bzw. Telefonieren des Gastteilnehmers im VPLMN mit dem HPLMN ausgetauscht werden;
- Figur 2:: schematisch ein Beispiel für die technische Realisierung des Verfahrens.

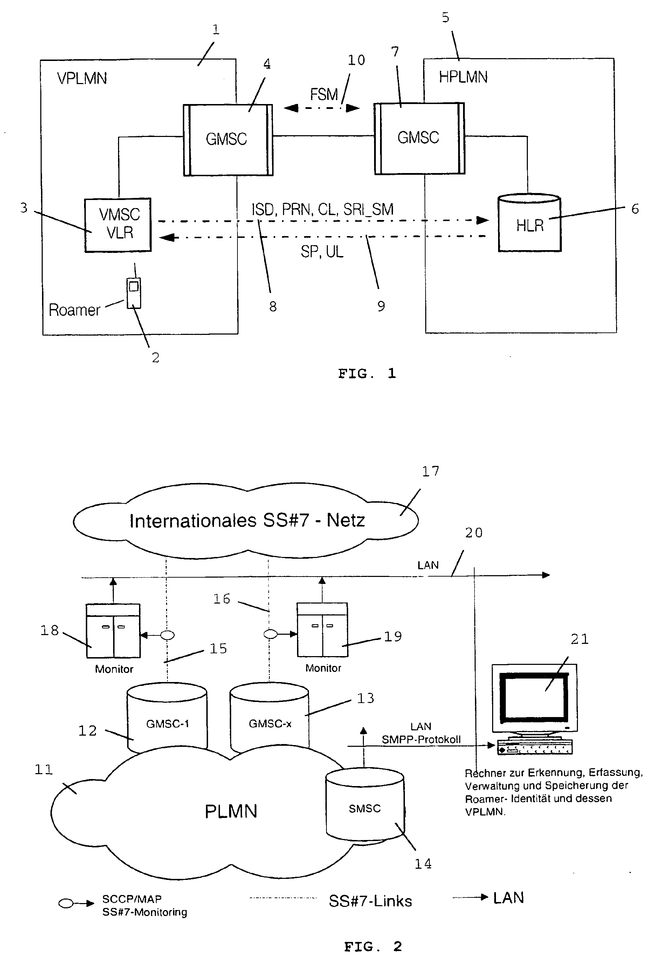

In Figur 1 ist ein Mobilfunkteilnehmer 2 dargestellt, welcher sich als Gastteilnehmer in einem fremden Mobilfunknetz 1 einbucht. Das fremde Mobilfunknetz ist über eine Zugangs-Mobilvermittlungsstelle 4 und das internationale Festnetz mit einer entsprechenden Zugangs-Mobilvermittlungsstelle 7 des Heimat-Mobilfunknetzes 5 des Teilnehmers 2 verbunden.

Ausgehend von einem der beiden Mobilfunknetze 1,5 werden die SCCP/MAP-Signalisierungsnachrichten über das internationale Festnetz zum jeweiligen anderen Mobilfunknetz 5,1 geroutet.

Es findet ein Informationsaustausch zwischen der Heimatdatenbank 6 (HLR) des Teilnehmers und der Besucherdatenbank 3 VLR im Fremdnetz statt. Die gestrichelten Pfeile 8,9, zeigen den logischen Ursprung und das logische Ziel der Operationen und der übermittelten Signalisierungsdaten an.

Figur 2 zeigt die technische Realisierung des Verfahrens: Es ist ein öffentliches Mobilfunknetz 11 dargestellt mit mehreren Vermittlungsstellen 12-14, bei die Vermittlungsstellen 12,13 Zugangsvermittlungsstellen darstellen, die eine Anbindung des Mobilfunknetzes 11 über CCS7-Verbindungen 15,16 an das Internationale CCS7-Fernsprechnetz erlauben. Die Vermittlungsstelle 14 dient gleichzeitig als Dienstevermittlungsstelle der Intelligenten Netzstruktur.

Zur Überwachung der Signalisierungsverbindungen (SCCP/MAP-Nachrichten) über die CCS7-Schnittstellen 15,15 werden Protokollaufzeichnungsgeräte 18,19 verwendet, die alle Übergänge vom Mobilfunknetz 11 ins Internationale Fernsprechnetz 17 mit CCS7-Signalisierung überwachen. Aus den von diesen Protokollaufzeichnungsgeräten gewonnenen Signalisierungsdaten kann die Identität MSISDN des Gastteilnehmers, die in der ISD-Nachricht nach einem UL enthalten ist, und gegebenenfalls die Identität des fremden Mobilfunknetzes ermittelt werden. Roamer sind in diesem Falle Mobilfunkteilnehmer eines anderen Netzbetreibers im eigenen Mobilfunknetz, sowie eigene Mobilfunkteilnehmer in einem anderen Mobilfunknetz.

Aufgrund der Erfassung und Auswertung der MSISDN und des VPLMN des Gastteilnehmers kann eine Benachrichtigung (z.B. eine Short Message oder eine Sprachnachricht) des Gastteilnehmers (International Roamers) erfolgen. Diese Benachrichtigung kann z.B. enthalten:
- Für Mobilfunkteilnehmer eines anderen Netzbetreibers z.B. eine "Roamer Welcome und Informationsnachricht".
- Für eigene Mobilfunkteilnehmer in einem anderen Mobilfunknetz z.B. Informationen über Tarife in diesem Mobilfunknetz.

Die Erkennung, Erfassung 'Verwaltung und Speicherung der Identität des Gastteilnehmers und gegebenenfalls dessen VPLMN sowie der Benachrichtigungszeit erfolgt nicht im Mobilfunknetz 11 (VLR, HLR oder einer anderen zentralen Stelle des Netzes) sondern in einem vom Mobilfunknetz unabhängigen Rechner 21. Dieser Rechner ist über eine Datenverbindung 20 mit den Protokollmonitoren 18,19 und einer Vermittlungsstelle 14 des Mobilfunknetzes 11 verbunden.
Durch diesen Rechner 21 erfolgt auch die Benachrichtigung der Teilnehmer z.B. über die Kurznachrichtendienst (Short-Message Service) des Mobilfunknetzes. Dabei kann dieser Rechner einen landesabhängigen Text an den Teilnehmer über das SMSC antriggern).

Die jeweiligen MSISDN, das VPLMN, sowie die Benachrichtigungszeit des Gastteilnehmers wird im Rechner 21 gespeichert. Alle weiteren Aufenthalte des Gastteilnehmers im VPLMN werden mit einem zweiten Zeitstempel dokumentiert, so daß über einen einfachen Entscheidungsmechanismus weitere Benachrichtigungen generiert bzw. verhindert werden können. Mittels einer Analyse der MSISDN (Ermittlung von Country code bzw. Network destination code) kann die Sprache für die Benachrichtigung festgelegt werden.

Aufgrund des SCCP-Routing (Calling / Called Address) kann das VPLMN eines Teilnehmers (eigener Mobilfunkteilnehmer in fremdem Mobilfunknetz) ermittelt werden und eine Benachrichtigung des Teilnehmers z.B. über die Gebühren in diesem Mobilfunknetz erfolgen.

### Zeichnungslegende, Abkürzungen

| | |
|---|---|
| 1 | Fremd-Mobilfunknetz (VPLMN) |
| 2 | Teilnehmer (Roamer) |
| 3 | Besucherdatei (VMSC, VLR) |
| 4 | Zugangs-Mobilvermittlungsstelle |
| 5 | Heimat-Mobilfunknetz (HPLMN) |
| 6 | Heimatdatenbank (HLR) |
| 7 | Zugangs-Mobilvermittlungsstelle |
| 8 | Kurznachrichten-Übermittlung (SMS) |
| 9 | SCCP/MAP-Signalisierungsnacnricht |
| 10 | SCCP/MAP-Signalisierungsnachrichten |
| 11 | Mobilfunknetz |
| 12 | Zugangs-Mobilvermittlungsstelle |
| 13 | Zugangs-Mobilvermittlungsstelle |
| 14 | Dienstevermittlungsstelle |
| 15 | CCS7-Verbindung |
| 16 | CCS7-Verbindung |
| 17 | Int. CCS7-Übergangsnetzwerk |
| 18 | Protokollaufzeichungsgerät |
| 19 | Protokollaufzeichungsgerät |
| 20 | Datenverbindung LAN |
| 21 | Rechner |

| | |
|---|---|
| VPLMN | : Visited Public Land Mobile Network |
| HPLMN | : Home Public Land Mobile Network |
| GMSC | : Gateway MSC mit SCCP Relay Funktion |

### Abkürzungen der MAP-Nachrichten

| | |
|---|---|
| ISD | : Insert Subscriber Data |
| PRN | : Provide Roaming Number |
| CL | : Cancel Location |
| SRI_SM | : Send Routing Info for Shortmessage |
| SP | : Send Parameters |
| UL | : Update Location |
| FSM | : Forward Shortmessage |

## Patentansprüche

1. Verfahren zur Erkennung einer internationalen Roaming-Beziehung zwischen einem Heimat-Mobilfunknetz (5) und einem Fremd-Mobilfunknetz (1) zum Zwecke der Benachrichtigung und Information eines Gastteilnehmers (2), wobei die Identität des Gastteilnehmers (2) ermittelt und anhand der ermittelten Identität im Fremd-Mobilfunknetz (1) eine gezielte Benachrichtigung und Information des Teilnehmers (2) erfolgt,
**dadurch gekennzeichnet,**
**daß** der Signalisierungsverkehr zwischen dem Heimat-Mobilfunknetz (5) und dem Fremd-Mobil-funknetz (1) überwacht und aufgezeichnet wird, und aus diesen Signalisierungsdaten die Identität des Gastteilnehmers (2) und des besuchten Fremd-Mobilfunknetzes (1) ermittelt wird, wobei auch Gastteilnehmer aus dem eigenen Mobilfunknetz in anderen Mobilfunknetzen erfasst und benachrichtigt werden.

2. Verfahren nach Anspruch 1, **dadurch gekennzeichnet, daß** anhand der ermittelten Identität die Benachrichtigung des Teilnehmers (2) in der im Heimat-Mobilfunknetz (5) benutzten Sprache erfolgt.

3. Verfahren nach einem der Ansprüche 1 oder 2, **dadurch gekennzeichnet, daß** die Benachrichtigung über den Kurznachrichtendienst (SMS) erfolgt.

4. Verfahren nach einem der Ansprüche 1 oder 3, **dadurch gekennzeichnet, daß** die Benachrichtigung durch eine Sprachansage erfolgt.

5. Verfahren nach einem der Ansprüche 1 bis 4, **dadurch gekennzeichnet, daß** die Überwachung des Signalisierungsverkehrs durch Protokollaufzeichnungsgeräte (18, 19) erfolgt.

6. Verfahren nach einem der Ansprüche 1 bis 5, **dadurch gekennzeichnet, daß** die Auswertung, Erfassung, Verwaltung und Speicherung der Signalisierungsdaten in einem vom Mobilfunknetz (1, 5) unabhängigen Rechner (21) erfolgt.

7. Verfahren nach einem der Ansprüche 1 bis 6, **dadurch gekennzeichnet, daß** von diesem Rechner (21) die Benachrichtigung des roamenden Teilnehmers (2) erfolgt.

8. Verfahren nach einem der Ansprüche 1 bis 7, **dadurch gekennzeichnet, daß** die Benachrichtigung nur bei erstmaligem Einbuchen des Teilnehmers (2) in das Fremd-Mobilfunknetz (1) erfolgt.

## Claims

1. Method for the detection of an international roaming relationship between a home mobile telephone network (5) and an outside mobile telephone network (1) for the purpose of notification and information of a guest subscriber (2), the identity of the guest subscriber (2) being determined and targeted notification and information of the subscriber (2) being effected using the identity determined in the outside mobile telephone network (1), **characterised in that** the signalling traffic between the home mobile telephone network (5) and the outside mobile telephone network (1) is monitored and recorded, and from these signalling data is determined the identity of the guest subscriber (2) and of the outside mobile telephone network visited (1), guest subscribers from one's own mobile telephone network also being detected and notified in other mobile telephone networks.

2. Method according to claim 1, **characterised in that** notification of the subscriber (2) is effected in the language used in the home mobile telephone network (5), using the identity determined.

3. Method according to one of claims 1 or 2, **characterised in that** notification is effected by the short message service (SMS).

4. Method according to one of claims 1 or 3, **characterised in that** notification is effected by a voice announcement.

5. Method according to one of claims 1 to 4, **characterised in that** monitoring of the signalling traffic is effected by protocol recording devices (18, 19).

6. Method according to one of claims 1 to 5, **characterised in that** evaluation, detection, management and storage of the signalling data are effected in a computer (21) independent of the mobile telephone network (1, 5).

7. Method according to one of claims 1 to 6, **characterised in that** notification of the roaming subscriber (2) is effected from this computer (21).

8. Method according to one of claims 1 to 7, **characterised in that** notification is effected only when the subscriber (2) first logs on to the outside mobile telephone network (1).

## Revendications

1. Procédé pour reconnaître une relation d'itinérance internationale entre un réseau de téléphonie mobile de rattachement (5) et un réseau de téléphonie mobile étranger (1) en vue d'avertir et d'informer un abonné itinérant (2), étant précisé que l'identité de l'abonné itinérant (2) est recherchée, et à l'aide de l'identité recherchée l'abonné (2) est averti et informé en conséquence dans le réseau mobile étranger (1),
**caractérisé en ce que** le trafic de signalisation entre le réseau de téléphonie mobile de rattachement (5) et le réseau de téléphonie mobile étranger (1) est surveillé et enregistré, et à partir de ces données de signalisation l'identité de l'abonné itinérant (2) et du réseau mobile étranger (1) visité est recherchée, étant précisé que même les abonnés itinérants venant du réseau mobile propre sont détectés et avertis dans d'autres réseaux mobiles.

2. Procédé selon la revendication 1, **caractérisé en ce qu'**à l'aide de l'identité recherchée, l'abonné (2) est averti dans la langue utilisée dans le réseau mobile de rattachement (5).

3. Procédé selon l'une des revendications 1 ou 2, **caractérisé en ce que** l'avertissement est adressé par l'intermédiaire du service de messages courts (SMS).

4. Procédé selon l'une des revendications 1 ou 3, **caractérisé en ce que** l'avertissement est adressé grâce à un message vocal.

5. Procédé selon l'une des revendications 1 à 4, **caractérisé en ce que** la surveillance du trafic de signalisation se fait grâce à des appareils d'enregistrement de protocole (18, 19).

6. Procédé selon l'une des revendications 1 à 5, **caractérisé en ce que** l'analyse, la saisie, la gestion et la mise en mémoire des données de signalisation se font dans un ordinateur (21) indépendant du réseau mobile (1, 5).

7. Procédé selon l'une des revendications 1 à 6, **caractérisé en ce que** l'avertissement de l'abonné itinérant (2) est adressé à partir de cet ordinateur (21)

8. Procédé selon l'une des revendications 1 à 7, **caractérisé en ce que** l'avertissement n'est adressé que lors du premier enregistrement de l'abonné (2) dans le réseau mobile étranger (1).
